# EUROPÄISCHE PATENTSCHRIFT

(11) **EP 1 148 805 B1**
(45) Veröffentlichungstag und Bekanntmachung des Hinweises auf die Patenterteilung: **03.08.2005**
(21) Anmeldenummer: 99959397.3
(22) Anmeldetag: 10.12.1999
(51) Int. Cl.: A47L 9/28, A47L 9/19

(54) **MESSSYSTEM ZUR RESTSTAUBÜBERWACHUNG FÜR SICHERHEITSSAUGER**
MEASURING SYSTEM FOR THE CONTROL OF RESIDUAL DUST IN SAFETY VACUUM CLEANERS
SYSTEME DE MESURE POUR CONTROLER LA POUSSIERE RESIDUELLE POUR ASPIRATEURS DE SECURITE

(30) Priorität: 08.01.1999 DE 19900484
(43) Veröffentlichungstag der Anmeldung: 31.10.2001
(73) Patentinhaber: WAP Reinigungssysteme GmbH & Co., 89287 Bellenberg (DE)
(72) Erfinder: NIEUWKAMP, Wolfgang, D-89250 Senden (DE)
(74) Vertreter: Riebling, Peter, Dr.-Ing.
(86) Internationale Anmeldenummer: PCT/EP1999/009728
(87) Internationale Veröffentlichungsnummer: WO 2000/040136

(56) Entgegenhaltungen:
- DE-U- 9 209 407
- GB-A- 2 225 933
- PATENT ABSTRACTS OF JAPAN vol. 016, no. 265 (C-0951), 16. Juni 1992 (1992-06-16) -& JP 04 063153 A (MATSUSHITA ELECTRIC IND CO LTD), 28. Februar 1992 (1992-02-28)
- PATENT ABSTRACTS OF JAPAN vol. 1999, no. 06, 31. März 1999 (1999-03-31) & JP 01 153131 A (MATSUSHITA ELECTRIC IND CO LTD), 15. Juni 1989 (1989-06-15)
- PATENT ABSTRACTS OF JAPAN vol. 016, no. 106 (C-0919), 16. März 1992 (1992-03-16) -& JP 03 280915 A (MURATA MFG CO LTD), 11. Dezember 1991 (1991-12-11)

## Beschreibung

Die Erfindung betrifft ein Meßsystem zur Reststaubüberwachung für Sicherheitssauger nach dem Oberbegriff des unabhängigen Patentanspruchs 1.

Ähnliche Meßeinrichtungen zur Überwachung der Staubkonzentration in der Abluft bei Schmutzsaugern sind bereits bekannt und verwenden physikalische Meßprinzipien wie beispielsweise die Messung des Differenzdruckes oder der Strahlungsreflexion.

Bei der Differenzdruckmessung wird der herrschende Druck vor der Filtereinheit mit dem herrschenden Druck nach der Filtereinheit bzw. nach dem Motor miteinander verglichen, wobei der Differenzdruck einen Schwellwert nicht unterschreiten darf. Bei nicht defektem und nicht verschmutztem Filter ist der zulässige Differenzdruck am geringsten, wohingegen der Differenzdruck mit zunehmender Verblockung des Filters zunimmt. Reißt der Filter, so entsteht ein unzulässiger Druckausgleich zwischen den Kammern vor und nach dem Filter und der Differenzdruck sinkt unter den zulässigen Schwellwert in Richtung Null-Differenzdruck. Die Unterschreitung des Differenzdrucks bei gerissenem Filter, aber auch die Überschreitung des Differenzdrucks bei verblocktem Filter kann zu Alarmzwecken oder Zwecken der Motorsteuerung ausgewertet werden.

Nachteil beim Meßprinzip mit der Differenzdruck-Methode ist, daß die Druckschwankungen durch Laufschwankungen des Motors wegen wechselnder Volumina und Geschwindigkeiten des Saugmediums und durch unterschiedliche Verblockung und Beschaffenheit des Filters doch so hoch sind, daß eine genaue Registrierung der Unter- oder Überschreitung des Schwellwertes und somit des Filterdefektes insbesondere bei kleinen Differenzdrücken nur unzureichend erreicht werden kann.

Mit der DE-GM 92 09 407.4 ist eine Vorrichtung zum Feststellen des Filterbruchs in Staubsaugeinrichtungen bekannt geworden, welche Vorrichtung das Prinzip der Infrarot-Strahlungsreflexion zur Partikelmessung in der Abluft einsetzt. Im Abluftkanal einer Staubsaugeinrichtung sind ein Infrarot-Sender und ein zugehöriger Infrarot-Empfänger am Umfang des Abluftkanals winkelversetzt zueinander angeordnet, wobei durch den Infrarot-Sender langwellige Energie in den Abluftkanal eingestrahlt wird. Diese Infrarot-Strahlung wird dann teilweise an den dort hindurchströmenden Schmutzpartikeln derart reflektiert, daß die Reflexionsstrahlung über den beispielsweise um 90° zum Infrarot-Sender versetzten Infrarot-Empfänger registriert wird.

Die Energieversorgung und die Meßsignalaufbereitung erfolgt in einer mit dem Sender und Empfänger verbundenen Auswerteelektronik. Durch die versetzte Anordnung von Sender und Empfänger wird durch die Überschneidung des jeweiligen Eingangs- und Ausgangs-Strahlkegel das Meßfeld definiert.

Bei Konzentrationserhöhung der Staubpartikel im Abluftkanal wird die durch den Sender eingestrahlte IR-Energie an den Partikeln verstärkt reflektiert und im Empfänger gemessen und somit kann ein in der Auswerteelektronik voreingestellter Schwellwert überschritten werden, welcher einen Alarm auslöst und/oder den Motor zum Stillstand bringt. Hierdurch soll ein Filterbruch gemessen und angezeigt werden, um gesundheitsgefährdende Partikelemissionen in die Umgebungsluft durch manuelles oder automatisches Abschalten des Saugmotors zu vermeiden und einen rechtzeitigen Filterwechsel zu ermöglichen.

Nachteil beim Meßprinzip mit Infrarot-Strahlungsreflexion zur Reststaub-Partikelmessung ist, daß die Optik sowohl von IR-Sender als auch von IR-Empfänger sehr leicht verschmutzen können, wodurch das Meßsignal verfälscht wird, da die Schmutzpartikel an Sender und Empfänger ebenfalls IR-Energie absorbieren und reflektieren, diese Schmutzpartikel jedoch nicht gemessen werden sollen, da sie ja nicht den aktuellen Stömungszustand im Abluftkanal wiederspiegeln. Diese Verfälschung des Meßsignals durch Verschmutzung kann schlecht kompensiert werden, da der Verschmutzungsgrad zeitlich und lokal nicht konstant ist sich damit nicht exakt definieren läßt. Dadurch ist eine effektive meßtechnische und/oder rechnerische Kompensation nur sehr mangelhaft möglich.

Weiterer Nachteil beim Meßprinzip mit Infrarot-Strahlungsreflexion zur Reststaub-Partikelmessung ist, daß die Messung auf den Fokussierbereich von Sender/Empfänger beschränkt ist. Das heißt, daß das durch die Überschneidung der Strahlungskegel von Sender und Empfänger definierte Meßfeld nicht den gesamten Querschnitt des Auslaßrohres überdeckt, wodurch außerhalb des Meßfeldes keine Partikelmessung stattfindet, was ebenfalls zu einer undefinierten, schlecht kompensierbaren Verfälschung des Meßsignals führt.

Aufgabe der Erfindung ist daher, ein Meßsystem für die Reststaubüberwachung für Sicherheitssauger so weiter zu bilden, daß die oben genannten Nachteile des Standes der Technik verringert oder gar vermieden werden, nämlich daß das Meßsystem robuster ausgebildet ist und eine zuverlässigere und exaktere Messung auch bei geringer Partikelkonzentration in der Abluft ermöglicht.

Hierbei soll das Meßsystem einerseits weniger anfällig gegen Verschmutzung sein und damit längere Wartungsintervalle ermöglichen, andererseits auch eine genauere Messung der Partikelkonzentration in der Abluft bewerkstelligen um über den Zustand des Filters exakter Auskunft geben zu können, ob ein Defekt vorliegt oder nicht. Es soll auch möglich sein geringe Staubkonzentrationen in der Abluft zu bestimmen.

Zur Lösung der gestellten Aufgabe dient die technische Lehre des unabhängigen Patentanspruchs 1.

Wesentliches Merkmal dabei ist, daß das erfindungsgemäße Meßsystem der Reststaubüberwachung für Sicherheitssauger vorsieht, daß mindestens eine Meßelektrode stomabwärts hinter der Filtereinheit angebracht ist, welche Meßelektrode einen durch Kontaktspannung zwischen Meßelektrode und Partikeln hervorgrufenen Strom in Abhängigkeit der Partikelkonzentration an eine Meßwert-Aufbereitung weiterleitet.

Hierbei entsteht eine Kontaktspannung durch intensive Berührung der im Trägermedium (Luft) mitgerissenen Staubpartikel mit dem Material der Meßelektrode. Bestehen die Staubpartikel aus einem Material, welches stofflich verschieden zum Material der Meßelektrode ist, dann kommt es zu einem Übertritt von Elektronen, welche zum niedereren Potential abfließen, und damit zu einem Stromfluß in der Ableitung der Meßelektrode in Funktion der berührenden Partikel und somit der Partikelkonzentration in der Abluft. Dies gilt für elektrisch leitende Partikel, wie auch für elektrisch isolierende Partikel. Bei elektrisch leitenden Partikel liegt die Ursache der Ladungstrennung in der unterschiedlichen Austrittsarbeit im Vergleich zur Meßelektrode und bei elektrisch isolierenden Partikel in der unterschiedlichen Elektronenaffinität im Vergleich zur Meßelektrode.

In einer bevorzugten Ausführungsform des Erfindungsgemäßen Meßsystems der Reststaubüberwachung für Sicherheitssauger ist es vorgesehen, daß mindestens eine Meßelektrode stromabwärts innerhalb des Auslaßrohres hinter dem Filter und hinter der Turbine angeordnet ist, vorzugsweise im Endbereich des Auslaßrohres. Auch soll es möglich sein, die Meßelektrode in der Nähe der Turbine im Auslaßrohr oder im Motorblock der Turbine selbst anzubringen.

In einer weiteren Ausführungsform des Erfindungsgemäßen Meßsystems der Reststaubüberwachung für Sicherheitssauger ist es vorgesehen, daß mindestens eine Meßelektrode stromabwärts hinter dem Filter aber vor der Turbine angebracht ist, bevorzugt direkt auf oder im Nahbereich der Filterausgangsfläche. Die Meßelektrode kann aber auch in einem Zwischenrohr oder einer Zwischenkammer zwischen Filter und Turbine angebracht sein oder aber im Nahbereich der Turbine im Motorblock.

Es wird bevorzugt, daß die Meßelektrode den gesamten Strömungsquerschnitt bedeckt, jedoch auf eine Art und Weise, daß der Strömungswiderstand im Sicherheitssauger nur unwesentlich vergrößert wird und somit der Wirkungsgrad des Saugers durch die Meßeinrichtung nicht beeinträchtigt wird.

Bevorzugt deckt mindestens eine Meßelektrode also die gesamte Filterausgangsfläche, den Querschnitt des Zwischenrohr oder der Zwischenkammer zwischen Filter und Turbine oder den gesamten Querschnitt des Auslaßrohres ab.

In einer bevorzugten Ausführungsform ist die Meßelektrode gitterförmig ausgebildet, ähnlich einem Maschendraht oder Lochblech, und liegt am Innenumfang des Rohres oder der Kammer mit seiner Mantelfläche dort fest.

Die gitterförmige Meßelektrode kann durch ein ringförmiges Element um die Mantelfläche begrenzt sein, wobei vorzugsweise das ringförmige Element aus dem gleichen Material wie die Meßelektrode besteht, kann jedoch auch beispielsweise aus flexiblem Kunststoff bestehen, in das die Meßelektrode eingegossen ist und in das Auslaßrohres klemmend eingeschoben wird. Die Festlegung der Meßelektrode kann über eine lösbare oder nicht lösbare Verbindung erfolgen, vorzugsweise jedoch über eine lösbare Schraub-, Rast- oder Klemmverbindung, oder eine Schweißverbindung.

Wenn die Meßelektrode direkt auf der Filterausgangsfläche oder in deren Nahbereich liegt, dann besitzt sie in etwa die gleiche Form wie der Filter, also z.B. ebenfalls Zylinder-/Rohrform bzw. Scheibenform und kann an ihrer Stirnseite und/oder Mantelfläche mit dem Filter verbunden sein.

Es soll auch vorgesehen sein, daß mehrere gitterartige Meßelektroden vorgesehen sind, welche ihr Meßsignal wiederum an eine Meßwert-Aufbereitung weiterleiten. Hierbei kann zusätzlich zur Information über die Höhe der Partikelkonzentration noch die Verteilung der Partikelkonzentration über den Querschnitt des Auslaßrohres gemessen werden und somit die Lage des Filterdefektes bestimmt werden. Dies gilt natürlich nur für eine Meßelektrode, welche sich zwischen Filter und Turbine befindet, da die Partikel in der Turbine ihre Strömungsbahn wesentlich ändern, so daß eine Korrelation zwischen Meßort und Partikelkonzentration hinter der Turbine oder auch im Nahbereich davor nicht mehr möglich ist.

Dadurch, daß sich die Staubpartikel im gewisser Weise vor der Berührung mit der Meßelektrode bereits im Einlaßkanal, in der Staubkammer (Gehäuse), beim Durchgang durch den Filter und der Turbine und im Auslaßkanal aufladen können, werden die Staubpartikel vor Kontakt mit der Meßelektrode bevorzugt entladen um Meßwertverfälschungen gering zu halten.

Dies geschieht durch Erdung der Teile der Sicherheitssaugers, welche zunächst in Kontakt mit den Partikeln kommen, bevor diese auf der Meßelektrode auftreffen.

Im Regelfall genügt eine Erdung des Turbinengehäuses, welches bei geringen Schutzanforderungen direkt geerdet wird und bei hohen Schutzanforderungen an künstliche Erde gelegt wird, also über Schutzimpedanzen mit einer der Phasen oder dem Nulleiter des Turbinenmotors elektrisch leitend verbunden wird.

Auch ist es möglich statt dessen oder zusätzlich das Gehäuse des Sicherheitssaugers zu erden, was meist standardmäßig auch aus Bediener-Sicherheitsgründen vorgesehen ist, wenn das Gehäuse nicht isolierend ausgeführt ist.

Unter den oben genannten Schutzanforderungen sind Berührungs- und Fremdkörperschutz, Wasserschutz und Explosionsschutz zu verstehen, wobei unter Ex-Schutz sowohl die Benutzung des Gerätes in einer Gefahrenzone (z.B. Tankstellenbereich), als auch die Benutzung des Gerätes mit Gefahrstoffen (z.B. Absaugen von explosiven Gasen/Flüssigkeiten) fallen.

Da die zu messenden elektrischen Ströme in der Meßelektrode aufgrund der Kontaktspannung durch intensive Berührung der im Trägermedium (Luft) mitgerissenen Staubpartikel mit dem Material der Meßelektrode lediglich einige Nano-Ampere (nA, 10⁻⁹) betragen, muß zur Weiterverarbeitung des Meßsignals dieses zunächst verstärkt werden.

Hier bietet sich eine Differenzverstärkung an, beispielsweise über einen linearen, invertierenden, differenzierenden Operationsverstärker an, welcher das Meßsignal invertiert und im Bezug auf Potential Erde oder künstliche Erde entsprechend in den Milli-Ampere-Berich (mA, 10⁻³) verstärkt.

Es können natürlich alle möglichen Ausbildungen eines Operationsverstärkers vorgesehen sein, wie Addierer, Subtrahierer, Integrierer, Differenzierer und sämtliche Kombinationen daraus, je nach dem was gemessen und wie gerechnet werden soll.

Es ist selbstverständlich, daß dieser Operationsverstärker bevorzugt in einem Mikrochip untergebracht ist und/oder auf einem Mikroprozessor, welcher z.B. Auch noch andere Aufgaben erfüllt, wie beispielsweise die Turbinenregelung oder andere Meß-, Steuer, und Regelaufgaben. Es können dann beispielsweise ständig oder nur bei Störung entsprechende Meßwerte oder Anweisungen auf Displays am Gerät ausgegeben werden.

Dieser Operationsverstärker, Mikrochip bzw. Mikroprozessor kann dann über eine übliche Schnittstelle mit einem Personal-Computer oder einem anderen Datenverarbeitungsgerät verbunden werden, um von dort aus Meß-, Steuer, und Regelaufgaben zu koordinieren oder um Meßdaten aus dem Speicher des Mikrochips bzw. des Mikroprozessors z.B. zu statistischen Zwecken auszulesen. Auch kann eine Kalibrierung über den PC erfolgen, in dem die Schwellwerte für die Weiterverarbeitung des Meßsignals wie z.B. Auslösung des Alarmes oder Aus-/Einschalten der Turbine eingegeben werden.

Ist die Filtereinheit defekt (z.B. geplatzt oder gerissen), dann steigt die Partikelkonzentration im Abluftstrom rapide an und es berühren viel mehr Partikel die Meßelektrode und somit steigt der Stromfluß von der Meßelektrode weg an, und somit das in der Verstärkerstufe nachgeschalteten Auswerteeinheit. Hier wird dann der gemessene Wert (Istwert) mit dem Schwellwert (Sollwert) verglichen und danach ein optisches und/oder akustisches Alarmsignal ausgegeben. Zusätzlich dazu oder ersatzweise kann automatisch der Turbinenmotor aus geschalten werden, was von Hand bewerkstelligt werden muß im Falle des ausschließlichen optischen und/oder akustischen Alarmsignales.

Die vorliegende Erfindung ist zwar vorzugsweise dazu konzipiert eine noch so geringe Filter-Leckage aufzuspüren, jedoch kann diese Meßeinrichtung auch dazu benutzt werden die Verblockung des Filters festzustellen, zur Anzeige zu bringen, optischen oder akustischen Alarm auszulösen, Turbinen automatisch oder per Hand abzustellen oder in der Beaufschlagung mit dem Saugstrom zu wechseln oder Filter automatisch oder per Hand zu wechseln. Ist also der Filter verblockt, dann wird ein voreigestellter Schwellwert des Meßsignals unterschritten und es kann wiederum ein optisches und/oder akustisches Alarmsignal ausgegeben werden oder der Turbinenmotor aus geschalten werden. Im Unterschied zum Turbinenstillstand, bei dem kein Meßsignal registriert wird, ist bei verblocktem Filter und eingeschalteter Turbine noch eine geringe Partikelkonzentration meßbar.

Bei Ausführungsformen des Sicherheitssaugers mit mehreren, unabhängigen Filtereinheiten kann durch die Überschreitung des voreingestellten Schwellwertes intern automatisch das Saugmedium auf eine unverbrauchte/nicht defekte Filtereinheit geleitet werden und erst wenn die letzte unverbrauchte Filtereinheit ebenfalls verbraucht ist, wird dann Alarm gegeben.

Bei Ausführungsformen des Sicherheitssaugers mit mehreren, unabhängigen Turbinen kann durch die Überschreitung des voreingestellten Schwellwertes intern automatisch das Saugmedium auf eine andere Turbine mit unverbrauchtem/nicht defektem Filter geleitet werden und erst wenn die letzte unverbrauchte/nicht defekte Filtereinheit dieser Turbinen ebenfalls verbraucht/defekt ist, wird dann Alarm gegeben.

Zur Verringerung von unangenehmen oder gesundheitsschädlichen Geräuschen durch die gitterförmige Meßelektrode im Strömungskanal, kann es vorgesehen sein , daß im Bereich des Auslaßkanals ein Schalldämpfer angebracht ist, welcher die Schallschwingungen so beeinflußt, daß der Lärmpegel unter ein zulässiges Maß abgesenkt wird. Bevorzugt wird die Anordnung des Schalldämpfers stromabwärts am freien Ende des Auslaßkanals.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Figur 1 zeigt das Erfindungsgemäße Meßsystem zur Reststaubüberwachung für Sicherheitssauger mit schematischer elektrischer Beschaltung. Hierbei ist der obere Teil des Sicherheitssaugers geschnitten dargestellt und die gitterförmige Meßelektrode im freien Ende des Auslaßkanals angebracht.

Figur 2 zeigt ein erstes Schaltprinzip der Erdung der Turbine für geringe Schutzanforderungen.

Figur 3 zeigt ein zweites Schaltprinzip der Erdung der Turbine für erhöhte Schutzanforderungen in Form einer künstlichen Erdung.

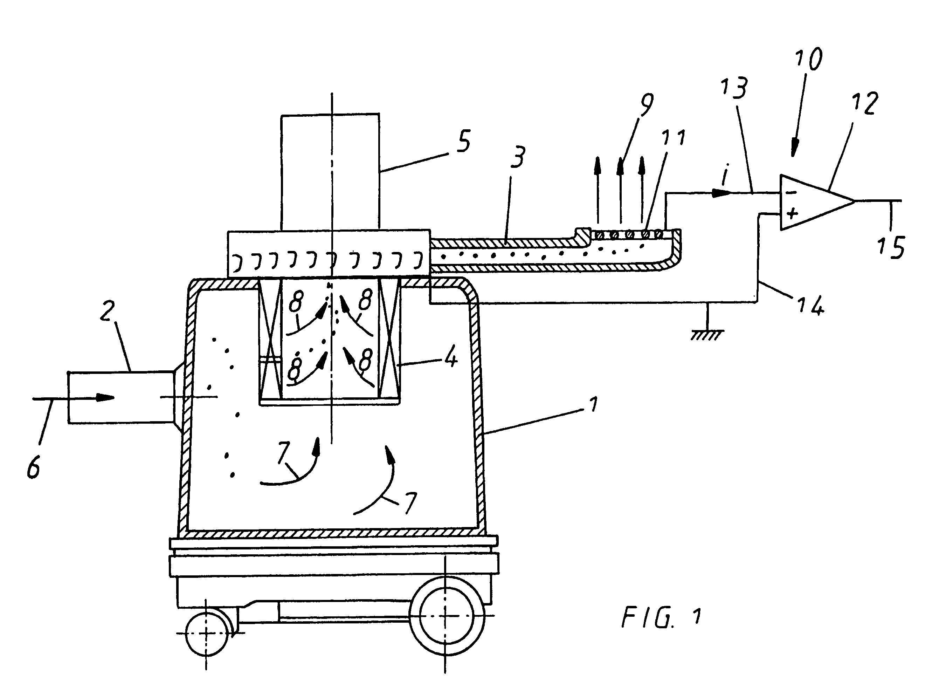

In Figur 1 ist das Erfindungsgemäße Meßsystem zur Reststaubüberwachung für Sicherheitssauger lediglich schematisch als Blockschaltbild eingezeichnet, um die elektrische Beschaltung der Meßelektrode 11 und die Funktionsweise des gesamten Sicherheitssaugers im Verbund mit dem Meßsystem 10 zu verdeutlichen. Es ist selbstverständlich, daß die elektronischen Komponenten 12 des Meßsystems 10 beispielsweise in einem separaten Modul in oder am Gehäuse 1 des Sicherheitssaugers angebracht ist, welches Modul HF-geschützt ist. Die Meßelektrode 11 selbst ist stellvertretend für alle anderen Ausführungsformen hier im freien Ende des Auslaßkanals 3 angeordnet. Die Turbine 5 mit stromabwärts aufgesetztem, rotationssymetrischen Filterelement 4 sitzt abgedichtet auf dem Gehäuse 1 des Sicherheitssaugers, dessen oberer Teil hier im Schnitt dargestellt ist.

Durch Betreiben der Turbine 5 wird nun durch den Einlaßkanal 2 in Strömungsrichtung 6 das abzusaugende Medium (z.B. staubhaltige Luft) in den Innenraum des Gehäuses 1 gesaugt. Dort fallen die schwereren eingesaugten Staubpartikel zu Boden und die leichteren werden in Richtung Filterelement 4 in Strömungsrichtungen 7 mitgerissen.

Je nach Porengröße des Filters 4 werden dann wiederum größere Partikel vor oder innerhalb des Filters 4 zurückgehalten, wobei kleinere Partikel unterhalb der Porengröße des Filters 4 vorzugsweise durch die Mantelfläche des Filters 4 hindurchdringen und dann in den Strömungsrichtungen 8 in Richtung Turbinenschaufel 5 gesaugt werden.

In der Turbine 5 werden die Partikel dann in Richtung Auslaßkanal 3 befördert, passieren den Bereich der Meßelektrode und treten in Strömungsrichtung 9 wieder aus dem Sicherheitssauger aus. Im Normalfall bei unverblocktem und nicht defektem Filter 4 treten nur kleinste Partikel (je nach Porengröße des Filters 4) aus dem Sicherheitssauger aus. Bei defektem Filter 4 treten unerwünscht viele Partikel in allen Größenordnungen (je nach Defekt) aus dem Sicherheitssauger aus. Bei verblocktem Filter 4 treten nahezu keine Partikel mehr aus dem Sicherheitssauger aus.

Bei Berührung der Partikel mit der gitterförmigen Meßelektrode, welche sich über den gesamten Querschnitt des Auslaßkanals erstreckt, tritt der Effekt der Ladungstrennung wie eingangs erläutert ein und es fließt über die Meßelektrode ein Meßstrom "i" in Richtung Auswerteeinheit ab. Dieser Meßstrom nimmt mit steigender Zahl der Berührungen der Partikel mit der gitterförmigen Meßelektrode zu und somit spiegelt der Meßstrom die Anzahl der Partikel in der Abluft sehr genau wieder. Durch die gleichmäßige Verteilung der gitterförmigen Meßelektrode über den gesamten Querschnitt des Auslaßkanals wird eine statistische Mittelung erzielt und so kann die Partikelzahl nach einmaliger Kalibrierung des Meßsystems sehr genau bestimmt werden, obwohl viele der Partikel natürlich die Meßelektrode ohne Berührung passieren.

Die Kalibrierung erfolgt über eine vordefinierte Anzahl von Partikeln mittlerer Größe (je nach Porengröße des Filters), die mit dem abfließenden Meßstrom aus der Meßelektrode in Korrelation gebracht wird.

Da die Meßströme nur sehr klein sind (einige nA) müssen diese zunächst über eine Eingangsleitung 13 z.B. einem Differenzverstärker 12 zugeführt werden und dort auf einige mA verstärkt werden um über die Ausgangsleitung 15 auf eine weitere Auswerteeinheit ein Signal zu geben. Die zweite Eingangsleitung 12 ist hierbei mit dem Turbinengehäuse 5 verbunden und liegt dabei auf Erde oder auf künstlicher Erde, je nach Erdung des Turbinengehäuses 5.

Diese Signal kann beispielsweise optisch/akustisch Anzeigen, ob ein voreingestellter Schwellwert z.B. bei Filterbruch überschritten wird, oder ob er durch Verblocken des Filters 4 unterschritten wird. Es kann auch direkt durch dieses Signal eine Stellgröße aus der Auswerteeinheit ausgegeben und z.B. die Turbine 5 gestoppt werden und/oder der Filter 4 automatisch im Gehäuse 1 gewechselt werden.

Auch kann ständig eine Messung der Partikelzahl erfolgen um diese Meßwerte dann in der nachgeschalteten Auswerteeinheit oder einem daran angeschlossenen Mikroprozessor und/oder Computer statistisch auszuwerten.

Diese Meßwerte können dann beispielsweise Aufschluß darüber geben, wie schnell und auf welche Art und Weise die Filter 4 verblocken und/oder defekt werden. Auch kann durch solche Statistiken z.B. ein Produktionsprozeß nachvollzogen und/oder überwacht werden, bei dem staubhaltige Produktionsabfälle abgesaugt werden. Es kann also z.B. eine mathematische Beziehung zwischen Werkzeug und/oder Werkzeugparameter mit dem Konzentrationsverlauf der Partikel über die Zeit und/oder Ort hergestellt werden.

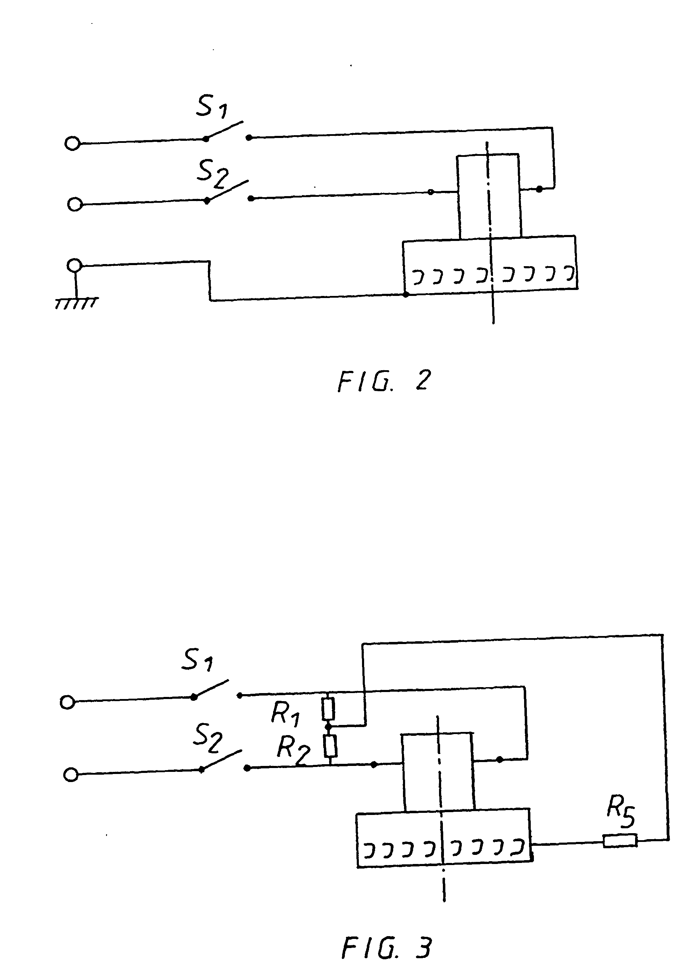

Figur 2 zeigt ein erstes Schaltprinzip der Erdung der Turbine für geringe Schutzanforderungen, wobei dabei das Gehäuse der Turbine geerdet ist und die Ansteuerung über Phasen und Nulleiter und der darin befindlichen Schalter S_{1,2} schematisch dargestellt ist.

Figur 3 zeigt ein zweites Schaltprinzip der Erdung der Turbine 5 für erhöhte Schutzanforderungen in Form einer künstlichen Erdung, wobei das Gehäuse der Turbine 5 über einen Schutzwiderstand Rs und je mindestens einem weiteren Widerstand R₁, R₂ mit den Phasen und dem Nulleiter der Leistungsversorgung der Turbine 5 verbunden ist. Somit liegt das Potential der künstlichen Erdung je nach Verhältnis der Widerstände R₁, R₂ bzw. des Spannungsteilers zwischen dem Potential der Phase und dem Potential des Nulleiters.

### Zeichnungslegende

- 1: Gehäuse des Sicherheitssaugers
- 2: Einlaßkanal
- 3: Auslaßkanal
- 4: Filterelement
- 5: Turbine
- 6: Strömungsrichtung
- 7: Strömungsrichtung
- 8: Strömungsrichtung
- 9: Strömungsrichtung
- 10: Meßsystem
- 11: Meßelektrode
- 12: Differenzverstärker
- 13: Eingangsleitung
- 14: Eingangsleitung
- 15: Ausgangsleitung

- R₁: Widerstand
- R₂: Widerstand
- S₁: Schalter
- S₂: Schalter

## Patentansprüche

1. Sicherheitssauger mit Meßsystem (10) zur Reststaubüberwachung, welcher ein Gehäuse (1), eine Turbine (5), ein Filterelement (4), sowie einen Einlaß- (2) und einen Auslaßkanal (3) beinhaltet, wobei im Betrieb des Sicherheitssaugers mittels der Turbine (5) der mit Schmutzpartikeln befrachtete Luftstrom durch den Einlaßkanal (2) und durch das Filterelement (4) hindurch in den Auslaßkanal (3) hinein und von dort nach außen gefördert wird, **dadurch gekennzeichnet, daß** mindestens eine Meßelektrode (11) stromabwärts des Luftstromes hinter der Filtereinheit (4) angebracht ist, welche Meßelektrode (11) einen durch Kontaktspannung zwischen Meßelektrode (11) und nicht gefilterten Schmutzpartikeln hervorgerufenen Strom in Abhängigkeit der Partikelkonzentration an eine Meßwert-Aufbereitung (12) weiterleitet, wobei die nicht gefilterten Schmutzpartikel vor Kontakt mit der Meßelektrode (11) im Wesentlichen elektrisch noch nicht geladen sind.

2. Sicherheitssauger mit Meßsystem (10) zur Reststaubüberwachung nach Anspruch 1, **dadurch gekennzeichnet, daß** die Meßelektrode (11) stromabwärts des Luftstromes hinter dem Filterelement (4) und stromabwärts des Luftstromes hinter der Turbine (5) angeordnet ist.

3. Sicherheitssauger mit Meßsystem (10) zur Reststaubüberwachung nach Anspruch 2, **dadurch gekennzeichnet, daß** die Meßelektrode (11) am freien Ende des Auslaßrohres (3) in diesem angebracht ist.

4. Sicherheitssauger mit Meßsystem (10) zur Reststaubüberwachung nach Anspruch 2, **dadurch gekennzeichnet, daß** die Meßelektrode (11) in der Nähe der Turbine (5) im Auslaßrohr (3) oder im Motorblock der Turbine (5) selbst angebracht ist.

5. Sicherheitssauger mit Meßsystem (10) zur Reststaubüberwachung nach Anspruch 1, **dadurch gekennzeichnet, daß** die Meßelektrode (11) stromabwärts des Luftstromes hinter dem Filterelement (4), aber vor der Turbine (5) angebracht ist.

6. Sicherheitssauger mit Meßsystem (10) zur Reststaubüberwachung nach Anspruch 5, **dadurch gekennzeichnet, daß** die Meßelektrode (11) direkt auf, oder im Nahbereich der Ausgangsfläche des Filterelements (4) stromabwärts des Luftstromes angebracht ist.

7. Sicherheitssauger mit Meßsystem (10) zur Reststaubüberwachung nach Anspruch 5, **dadurch gekennzeichnet, daß** die Meßelektrode (11) in einem Zwischenrohr oder einer Zwischenkammer zwischen Filterelement (4) und Turbine (5) angebracht ist.

8. Sicherheitssauger mit Meßsystem (10) zur Reststaubüberwachung nach Anspruch 5, **dadurch gekennzeichnet, daß** die Meßelektrode (11) im Nahbereich der Turbinenschaufel im Turbinengehäuse (5) angebracht ist.

9. Sicherheitssauger mit Meßsystem (10) zur Reststaubüberwachung nach Anspruch 1 - 8, **dadurch gekennzeichnet, daß** die Meßelektrode (11) den gesamten Strömungsquerschnitt bedeckt.

10. Sicherheitssauger mit Meßsystem (10) zur Reststaubüberwachung nach Anspruch 1 - 9, **dadurch gekennzeichnet, daß** die Meßelektrode (11) gitterförmig ausgebildet ist und elektrisch isoliert im Sicherheitssauger angebracht ist.

11. Sicherheitssauger mit Meßsystem (10) zur Reststaubüberwachung nach Anspruch 1 - 10, **dadurch gekennzeichnet, daß** die Turbine (5) direkt geerdet oder künstlich geerdet ist.

12. Sicherheitssauger mit Meßsystem (10) zur Reststaubüberwachung nach Anspruch 1 - 11, **dadurch gekennzeichnet, daß** das Gehäuse (1) direkt geerdet oder künstlich geerdet ist.

13. Sicherheitssauger mit Meßsystem (10) zur Reststaubüberwachung nach Anspruch 1 - 12, **dadurch gekennzeichnet, daß** in einem Differenzverstärker (12) der Messwert-Aufbereitung der Meßstrom geeignet verstärkt und an eine Meßwert-Weiterbearbeitungseinheit weiterleitet wird.

14. Sicherheitssauger mit Meßsystem (10) zur Reststaubüberwachung nach Anspruch 13, **dadurch gekennzeichnet, daß** die Meßwert-Weiterbearbeitungseinheit getaktet einen Soll-/Istwert-Vergleich durchführt und bei unter- oder überschreiten des Sollwerts ein Ausgangssignal ausgibt.

15. Sicherheitssauger mit Meßsystem (10) zur Reststaubüberwachung nach Anspruch 14, **dadurch gekennzeichnet, daß** durch dieses Ausgangssignal ein optischer und/oder akustischer Alarm gegeben wird, und/oder daß die Turbine (5) abgeschaltet wird, und/oder daß ein automatisches Wechseln des Filterelements (4) und/oder der Turbine (5) mit Filterelement (4) vollzogen wird.

16. Sicherheitssauger mit Meßsystem (10) zur Reststaubüberwachung nach Anspruch 1 - 15, **dadurch gekennzeichnet, daß** der Meßstrom ständig oder in zeitlichen Abständen direkt oder in Form der korrelierenden Partiketzahl oder in Form der anteiligen Filterverblockung oder in Form des Filterschädigungsgrades auf einem Display angezeigt wird.

17. Sicherheitssauger mit Meßsystem (10) zur Reststaubüberwachung nach Anspruch 1 - 16, **dadurch gekennzeichnet, daß** der Wert des Meßstromes ständig oder in zeitlichen Abständen in einen Speicher geschrieben wird, welcher Speicher sich im Sicherheitssauger selbst oder auch extern befindet.

18. Sicherheitssauger mit Meßsystem (10) zur Reststaubüberwachung nach Anspruch 1 - 17, **dadurch gekennzeichnet, daß** die Messwert-Weiterbearbeitungseinheit über eine Schnittstelle mit einer externen Datenverarbeitungsanlage bzw. einem Computer koppelbar ist.

## Claims

1. Safety vacuum cleaner comprising a measuring system (10) for residual dust monitoring, containing a housing (1), a turbine (5), a filter element (4) and an inlet channel (2) and an outlet channel (3), wherein, during operation of the safety vacuum cleaner, the air flow laden with dirt particles is conveyed by means of the turbine (5) through the inlet channel (2) and through the filter element (4) into the outlet channel (3) and from there to the outside, **characterised in that** at least one measuring electrode (11) is attached behind the filter element (4) downstream from the air flow, which measuring electrode (11) passes a current brought about by contact potential difference between the measuring electrode (11) and non-filtered dirt particles as a function of the particle concentration to a measured value processing system (12), the non-filtered dirt particles substantially not yet being electrically charged prior to contact with the measuring electrode (11).

2. Safety vacuum cleaner comprising a measuring system (10) for residual dust monitoring according to claim 1, **characterised in that** the measuring electrode (11) is arranged downstream from the air flow behind the filter element (4) and downstream from the air flow behind the turbine (5).

3. Safety vacuum cleaner comprising a measuring system (10) for residual dust monitoring according to claim 2, **characterised in that** the measuring electrode (11) is attached in the outlet tube (3) at the free end thereof.

4. Safety vacuum cleaner comprising a measuring system (10) for residual dust monitoring according to claim 2, **characterised in that** the measuring electrode (11) is attached close to the turbine (5) in the outlet tube (3) or in the motor block of the turbine (5) itself.

5. Safety vacuum cleaner comprising a measuring system (10) for residual dust monitoring according to claim 1, **characterised in that** the measuring electrode (11) is attached downstream from the air flow behind the filter element (4) but in front of the turbine (5).

6. Safety vacuum cleaner comprising a measuring system (10) for residual dust monitoring according to claim 5, **characterised in that** the measuring electrode (11) is attached directly on, or in the immediate vicinity of the output face of the filter element (4) downstream from the air flow.

7. Safety vacuum cleaner comprising a measuring system (10) for residual dust monitoring according to claim 5, **characterised in that** the measuring electrode (11) is attached in an intermediate tube or an intermediate chamber between the filter element (4) and turbine (5).

8. Safety vacuum cleaner comprising a measuring system (10) for residual dust monitoring according to claim 5, **characterised in that** the measuring electrode (11) is attached in the close vicinity of the turbine blade in the turbine housing (5).

9. Safety vacuum cleaner comprising a measuring system (10) for residual dust monitoring according to claim 1 to 8, **characterised in that** the measuring electrode (11) covers the entire flow cross-section.

10. Safety vacuum cleaner comprising a measuring system (10) for residual dust monitoring according to claim 1 to 9, **characterised in that** the measuring electrode (11) is formed in a grid shape and is attached in the safety vacuum cleaner in an electrically insulated manner.

11. Safety vacuum cleaner comprising a measuring system (10) for residual dust monitoring according to claim 1 to 10, **characterised in that** the turbine (5) is earthed directly or artificially.

12. Safety vacuum cleaner comprising a measuring system (10) for residual dust monitoring according to claim 1 to 11, **characterised in that** the housing (1) is earthed directly or artificially.

13. Safety vacuum cleaner comprising a measuring system (10) for residual dust monitoring according to claim 1 to 12, **characterised in that**, in a differential amplifier (12) of the measured value processing system, the measuring current is suitably reinforced and passed to a measured value further processing unit.

14. Safety vacuum cleaner comprising a measuring system (10) for residual dust monitoring according to claim 13, **characterised in that** the measured value further processing unit carries out a desired/actual value comparison in a clocked manner and emits an output signal when the desired value is fallen below or exceeded.

15. Safety vacuum cleaner comprising a measuring system (10) for residual dust monitoring according to claim 14, **characterised in that** an optical and/or acoustic alarm is emitted owing to this output signal, and/or **in that** the turbine (5) is switched off, and/or that an automatic change of the filter element (4) and/or the turbine (5) with the filter element (4) is carried out.

16. Safety vacuum cleaner comprising a measuring system (10) for residual dust monitoring according to claim 1 to 15, **characterised in that** the measuring current is displayed on a display continuously or at time intervals directly or in the form of the correlating particle count or in the form of the proportional filter blocking or in the form of the degree of filter damage.

17. Safety vacuum cleaner comprising a measuring system (10) for residual dust monitoring according to claim 1 to 16, **characterised in that** the value of the measuring current is written into a memory continuously or at time intervals, said memory being located in the safety vacuum cleaner itself or else externally.

18. Safety vacuum cleaner comprising a measuring system (10) for residual dust monitoring according to claim 1 to 17, **characterised in that** the measured value further processing unit can be coupled to an external data processing system or a computer via an interface.

## Revendications

1. Aspirateur de sécurité avec un système de mesure (10) pour contrôler la poussière résiduelle, qui contient un carter (1), une turbine (5), un élément filtrant (4) et des conduits d'admission (2) et de sortie (3), étant précisé que lors du fonctionnement de l'aspirateur de sécurité, grâce à la turbine (5), le courant d'air chargé de particules de saletés entre par le conduit d'admission (2) et par l'élément filtrant (4) dans le conduit de sortie (3), d'où il est amené à l'extérieur, **caractérisé en ce qu'**il est prévu en aval de l'unité filtrante (4) par rapport au courant d'air, au moins une électrode de mesure (11) qui transmet à un dispositif de traitement de valeurs de mesure (12), en fonction de la concentration de particules, un courant qui est provoqué par la tension de contact entre l'électrode de mesure (11) et les particules de saletés non filtrées, les particules de saletés non filtrées n'étant quasiment pas encore chargées électriquement avant leur contact avec l'électrode de mesure (11).

2. Aspirateur de sécurité avec un système de mesure (10) pour contrôler la poussière résiduelle selon la revendication 1, **caractérisé en ce que** l'électrode de mesure (11) est disposée en aval de l'élément filtrant (4) et de la turbine (5) par rapport au courant d'air.

3. Aspirateur de sécurité avec un système de mesure (10) pour contrôler la poussière résiduelle selon la revendication 2, **caractérisé en ce que** l'électrode de mesure (11) est disposée à l'extrémité libre du tuyau de sortie (3), dans celui-ci.

4. Aspirateur de sécurité avec un système de mesure (10) pour contrôler la poussière résiduelle selon la revendication 2, **caractérisé en ce que** l'électrode de mesure (11) est montée près de la turbine (5) dans le tube de sortie (3), ou dans le bloc moteur de la turbine (5) elle-même.

5. Aspirateur de sécurité avec un système de mesure (10) pour contrôler la poussière résiduelle selon la revendication 1, **caractérisé en ce que** l'électrode de mesure (11) est montée en aval de l'élément filtrant (4), mais en amont de la turbine (5) par rapport au courant d'air.

6. Aspirateur de sécurité avec un système de mesure (10) pour contrôler la poussière résiduelle selon la revendication 5, **caractérisé en ce que** l'électrode de mesure (11) est montée directement sur ou dans la zone de proximité de la surface de sortie de l'élément filtrant (4), en aval par rapport au courant d'air.

7. Aspirateur de sécurité avec un système de mesure (10) pour contrôler la poussière résiduelle selon la revendication 5, **caractérisé en ce que** l'électrode de mesure (11) est montée dans un tuyau intermédiaire ou dans une chambre intermédiaire entre l'élément filtrant (4) et la turbine (5).

8. Aspirateur de sécurité avec un système de mesure (10) pour contrôler la poussière résiduelle selon la revendication 5, **caractérisé en ce que** l'électrode de mesure (11) est montée dans la zone de proximité de l'ailette de turbine, dans le carter de turbine (5).

9. Aspirateur de sécurité avec un système de mesure (10) pour contrôler la poussière résiduelle selon l'une des revendications 1 à 8, **caractérisé en ce que** l'électrode de mesure (11) couvre toute la section transversale d'écoulement.

10. Aspirateur de sécurité avec un système de mesure (10) pour contrôler la poussière résiduelle selon l'une des revendications 1 à 9, **caractérisé en ce que** l'électrode de mesure (11) a la forme d'une grille et est montée dans ledit aspirateur en étant isolée électriquement.

11. Aspirateur de sécurité avec un système de mesure (10) pour contrôler la poussière résiduelle selon l'une des revendications 1 à 10, **caractérisé en ce que** la turbine (5) est mise à la terre directement ou artificiellement.

12. Aspirateur de sécurité avec un système de mesure (10) pour contrôler la poussière résiduelle selon l'une des revendications 1 à 11, **caractérisé en ce que** le carter (1) est mis à la terre directement ou artificiellement.

13. Aspirateur de sécurité avec un système de mesure (10) pour contrôler la poussière résiduelle selon l'une des revendications 1 à 12, **caractérisé en ce que** dans un amplificateur différentiel (12) du dispositif de traitement de valeurs de mesure, le courant de mesure est amplifié d'une manière appropriée et est transmis à une unité de traitement de valeurs de mesure.

14. Aspirateur de sécurité avec un système de mesure (10) pour contrôler la poussière résiduelle selon la revendication 13, **caractérisé en ce que** l'unité de traitement de valeurs de mesure effectue de manière synchronisée une comparaison valeur théorique/valeur réelle et émet un signal de sortie dans le cas d'une valeur inférieure ou supérieure à la valeur théorique.

15. Aspirateur de sécurité avec un système de mesure (10) pour contrôler la poussière résiduelle selon la revendication 14, **caractérisé en ce que** ce signal de sortie déclenche une alarme optique et/ou acoustique et/ou **en ce que** la turbine (5) est arrêtée et/ou **en ce qu'**un changement automatique de l'élément filtrant (4) et/ou de la turbine (5) avec l'élément filtrant (4) est effectué.

16. Aspirateur de sécurité avec un système de mesure (10) pour contrôler la poussière résiduelle selon l'une des revendications 1 à 15, **caractérisé en ce que** le courant de mesure est visualisé sur un affichage en permanence ou périodiquement, directement, ou sous la forme du nombre de particules de corrélation ou sous la forme du pourcentage d'obturation du filtre ou sous la forme du degré de dégradation du filtre.

17. Aspirateur de sécurité avec un système de mesure (10) pour contrôler la poussière résiduelle selon l'une des revendications 1 à 16, **caractérisé en ce que** la valeur du courant de mesure est inscrite dans une mémoire en permanence ou périodiquement, laquelle mémoire se trouve dans l'aspirateur lui-même ou à l'extérieur.

18. Aspirateur de sécurité avec un système de mesure (10) pour contrôler la poussière résiduelle selon l'une des revendications 1 à 17, **caractérisé en ce que** l'unité de traitement de valeurs de mesure est apte à être couplée grâce à une interface avec une installation informatique extérieure ou un ordinateur.
